# EUROPÄISCHE PATENTSCHRIFT

(11) **EP 2 678 128 B1**
(45) Veröffentlichungstag und Bekanntmachung des Hinweises auf die Patenterteilung: **10.07.2019**
(21) Anmeldenummer: 12712531.8
(22) Anmeldetag: 23.02.2012
(51) Int. Cl.: B23C 5/20

(54) **FRÄSWERKZEUG**
MILLING TOOL
OUTIL DE FRAISAGE

(30) Priorität: 24.02.2011 AT 1092011 U
(43) Veröffentlichungstag der Anmeldung: 01.01.2014
(73) Patentinhaber: Ceratizit Austria Gesellschaft M.b.H., 6600 Reutte (AT)
(72) Erfinder: BURTSCHER, Peter, A-6651 Häselgehr (AT); DUWE, Jürgen, A-6611 Heiterwang (AT); KRABICHLER, Markus, A-6600 Lechaschau (AT); SCHLEINKOFER, Uwe, A-6600 Reutte (AT)
(86) Internationale Anmeldenummer: PCT/AT2012/000041
(87) Internationale Veröffentlichungsnummer: WO 2012/113006

(56) Entgegenhaltungen:
- WO-A1-2010/017859
- WO-A1-2010/110009
- WO-A2-2010/134700
- DE-T2- 60 211 187
- JP-A- 11 019 817
- JP-U- 57 126 904
- US-A1- 2009 290 946

## Beschreibung

Die Erfindung betrifft ein Fräswerkzeug nach dem Oberbegriff von Anspruch 1. Schneideinsätze, bei denen an gegenüberliegenden Seiten des Grundkörpers Schneidkanten ausgebildet sind, sind bekannt. Sie haben gegenüber Schneideinsätzen, bei denen nur auf einer Seite Schneidkanten ausgebildet sind den Vorteil, dass der Schneideinsatz nach dem Verschleiß der Schneidkanten auf einer Seite gewechselt werden kann, so dass insgesamt doppelt so viele Schneidkanten zur Verfügung stehen. Sie haben aber gegenüber nur einseitig verwendbaren Schneideinsätzen den Nachteil, dass der zur problemlosen Zerspanung notwendige Freiwinkel der Schneidkanten nur durch sehr starkes radiales und axiales Verkippen des Schneideinsatzes im Werkzeuggrundkörper erreicht werden kann, während bei den einseitig verwendbaren Schneideinsätzen der notwendige Freiwinkel zumindest zum überwiegenden Teil allein durch Ausgestaltung des Grundkörpers des Schneideinsatzes verwirklicht werden kann.

Ein gravierender Nachteil bei der starken Verkippung der zweiseitig verwendbaren Schneideinsätze ist die Ausbildung eines sehr großen negativen Eingriffswinkels, wodurch gegenüber einem einseitig verwendbaren Schneideinsatz ein vergleichsweise härterer Schneideneingriff und deutlich höhere Zerspanungskräfte auftreten.

Ein Schneideinsatz mit einem im Wesentlichen zylindrischen Grundkörper mit Schneidkanten, die in Draufsicht auf die Spanflächen kreisförmig ausgeführt sind und der zudem zweiseitig verwendbar ist, wird beispielsweise in der DE 10 2008 037 915 - B3 beschrieben, die ein Fräswerkzeug nach dem Oberbegriff von Anspruch 1 offenbart.

Die gegenüberliegenden Spanflächen sind dabei durch eine in Seitenansicht gesehen exakt geradlinig parallel zur Achse der Mittellochbohrung des Schneideinsatzes verlaufende Freifläche miteinander verbunden. Die Spanflächen weisen eine um die zentrale Mittellochbohrung herum angeordnete Ausmuldung mit mehreren gleichen symmetrisch angeordneten segmentartigen Ausnehmungen oder Vorsprüngen auf. Diese segmentartigen Vorsprünge oder Ausnehmungen dienen der Indexierung und genauen Positionierung des Schneideinsatzes auf der Auflagefläche des Werkzeuggrundkörpers. Bei Verschleiß des sich in Zerspanungsposition befindlichen Schneidkantenabschnittes wird der Schneideinsatz verdreht bis der nächste noch unverschlissene Schneidkantenabschnitt zum Einsatz kommt. Die Spanflächen weisen anschließend an die segmentartigen Ausnehmungen oder Vorsprünge einen ringförmigen Bereich auf, der an der Verschneidung mit der Freifläche, in Seitenansicht auf die Freifläche gesehen, mehrere unmittelbar aneinandergrenzende konkave Schneidkantenabschnitte bildet.

Der Nachteil bei diesem Schneideinsatz ist, dass durch die konkaven Schneidkantenabschnitte auf Grund der stark verkippten Einbaulage des Schneideinsatzes im Werkzeuggrundkörper nur am Anfang des Schneidkantenabschnittes ein weicher Schneideingriff erzielt wird, der sich dann im weiteren Verlauf der Schneidkante deutlich verschlechtert. Damit sind die insgesamt bei der Zerspanung auftretenden Schnittkräfte bei einem derartigen Schneideinsatz weiterhin sehr hoch.

Die DE 10 2006 025 293 - B4 beschreibt ebenfalls einen Schneideinsatz mit einem im Wesentlichen zylindrischen Grundkörper, der doppelseitig verwendbar ist.

Er weist zwei gegenüberliegende, im Wesentlichen ebene Spanflächen auf, die durch eine leicht konkav verlaufende Freifläche miteinander verbunden sind. An der Verschneidung der Freifläche mit den Spanflächen werden in Draufsicht auf die jeweilige Spanfläche gesehen, exakt kreisförmige Schneidkanten gebildet. In Seitenansicht auf die Freiflächen gesehen, verlaufen diese Schneidkanten gerade, senkrecht zur Achse des Mittelloches, das die Spanfläche des Schneideinsatzes durchsetzt.

Auch bei diesem Schneideinsatz ist es von Nachteil, dass es bei der stark verkippten Einbaulage des Schneideinsatzes im Werkzeuggrundkörper bedingt durch den Schneidkantenverlauf zu einem harten Schneideingriff, verbunden mit sehr hohen Schnittkräften, kommt.

JP S57-126904 U beschreibt einen Schneideinsatz in Form einer kreisförmigen Platte, bei dem an zumindest einer der kreisförmigen Oberflächen eine Spanbrecher-Vertiefung in Verbindung mit einem zentralen Vorsprung vorgesehen ist. Die Spanbrecher-Vertiefung weist in ihrem Umfang eine Oberfläche mit einer gewellten Form auf und ist in gleiche Teile unterteilt. Der zentrale Vorsprung weist ebenfalls eine Oberfläche mit einer gewellten Form derart auf, dass er von der Spanbrecher-Vertiefung hervorsteht.

DE 602 11 187 T2 zeigt einen Schneideinsatz mit einer oberen Fläche, einer unteren Fläche und einer sich zwischen der oberen Fläche und der unteren Fläche erstreckenden Seitenfläche. Eine Verschneidung zwischen der oberen Fläche und der Seitenfläche bildet sich ununterbrochen am Umfang erstreckende Schneidkantenabschnitte. Ein zylindrischer Vorsprung erstreckt sich von der unteren Fläche nach unten und hat eine Bodenfläche, die von einer Umfangsfläche umgeben ist. Eine Durchgangsbohrung mit einer Bohrungsachse erstreckt sich zwischen der oberen Fläche und der Bodenfläche. Die Seitenfläche weist Drehbegrenzungsflächen benachbart zu der unteren Fläche auf.

Die Aufgabe der vorliegenden Erfindung ist es daher, ein Fräswerkzeug aufweisend einen Schneideinsatz mit im Wesentlichen zylinderförmigem Grundkörper zu schaffen, der doppelseitig verwendbar ist und trotzdem einen weicheren Schneideingriff, verbunden mit vergleichsweise deutlich geringeren Schneidkräften bei der Zerspanung, bewirkt.

Erfindungsgemäß wird dies durch ein Fräswerkzeug gemäß Anspruch 1 gelöst.

Im Wesentlich gerade Abschnitte ist dabei so auszulegen, dass gerade Abschnitte über beidseitige kurvenförmige Übergänge mit den konvex kurvenförmigen Abschnitten verbunden sind.

Durch den wellenförmigen Verlauf der Schneidkanten wird trotz der für einen doppelseitig verwendbaren Schneideinsatz notwendigen starken radialen und axialen Einbauwinkel ein sehr weicher Schneideneingriff erzielt, der zumindest dem Eingriffsverhalten bei einem nur einseitig verwendbaren Schneideinsatz entspricht oder dieses sogar übertrifft.

In einer vorteilhaften Ausgestaltung der Erfindung weist die Freifläche einen Freiwinkel α von 0° auf.
Auf diese Weise wird eine optimale Stabilität der Schneidkanten erreicht.

In einer weiteren vorteilhaften Ausgestaltung weist der unmittelbar an die Schneidkanten angrenzende ringförmige Bereich einen Spanwinkel β im Bereich von 20° bis 30° auf.

Dadurch wird erreicht, dass der effektive Spanwinkel in Einbaulage einen für den Anwendungsbereich des Werkzeuges günstigen Wert annimmt, der die Spanbildung und die Schnittkräfte optimiert.

Besonders von Vorteil ist es auch, wenn der ringförmige Bereich über eine Stufe, in eine ebene Einsenkung im Zentrumsbereich senkrecht zur Achse A, übergeht.

Auf diese Weise wird eine optimale Auflage des Schneideinsatzes auf der Auflagefläche des Werkzeuggrundkörpers erreicht.
Durch die ebene Einsenkung im Zentrumsbereich gibt es keinerlei Erhebungen auf der Spanfläche, welche den Spanabfluss behindern könnten.

In einer weiteren vorteilhaften Ausgestaltung der Erfindung weist die Freifläche mittig mindestens zwei kalottenförmige Ausnehmungen zur Indexierung des Schneideinsatzes auf.
Durch die mittige Anordnung wird auf einfache Weise eine Indexierung des Schneideinsatzes gleichzeitig für beide Seiten des Schneideinsatzes erreicht. Durch die Kalottenform, die vorzugsweise mit einer entsprechend angepassten Kugelabschnittsfläche des Werkzeuggrundkörpers zusammenwirkt, wird eine leichtgängige Indexierung des Schneideinsatzes ermöglicht.

Vorteilhaft dabei ist es, wenn die Anzahl der kalottenförmigen Ausnehmungen der Anzahl der konvex kurvenförmigen Abschnitte auf einer Seite des Schneideinsatzes entspricht und dass die konvex kurvenförmigen Abschnitte und die kalottenförmigen Ausnehmungen so zueinander angeordnet sind, dass bei einem Wenden des Schneideinsatzes im Werkzeug eine gleichartige Positionierung der in Schneidposition stehenden Schneidkanten vorliegt. Das bedeutet, dass der Schneidkantenverlauf der beiden gegenüberliegenden Spanflächen um eine Querachse zur Achse A um 180° zueinander verdreht ist.

Von Vorteil ist es auch, wenn auf jeder Spanfläche des Schneideinsatzes vier konvex kurvenförmige Ausnehmungen ausgebildet sind.

In diesem Fall wird ein optimaler Kompromiss zwischen einer möglichst großen Anzahl einsetzbarer unterschiedlicher Schneidkantenabschnitte bei gleichzeitig ausreichender Länge des jeweils für die Bearbeitung zur Verfügung stehenden Schneidkantenabschnittes erreicht.
Für die Befestigung des Schneideinsatzes kann es von Vorteil sein, wenn die Einsenkung im Zentrumsbereich von einer Mittellochbohrung durchsetzt wird. Dann kann der Schneideinsatz auf einfache Weise mit einer Klemmschraube am Werkzeuggrundkörper befestigt werden.

Ein Fräswerkzeug, bei dem die Schneideinsätze verwendet werden, weist einen Grundkörper mit zumindest abschnittsweise kugelförmig ausgestalteten Indexierelementen auf.

Im Folgenden wird die Erfindung an Hand von Figuren näher erläutert.

Es zeigen:

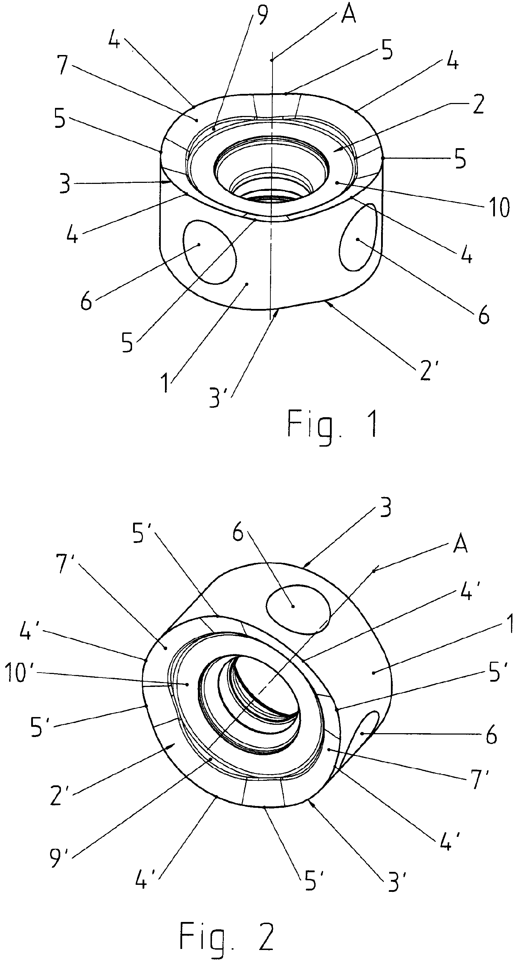

- Fig. 1: einen Schneideinsatz in Schrägansicht von oben
- Fig. 2: den Schneideinsatz nach Fig. 1 in Schrägansicht von untern

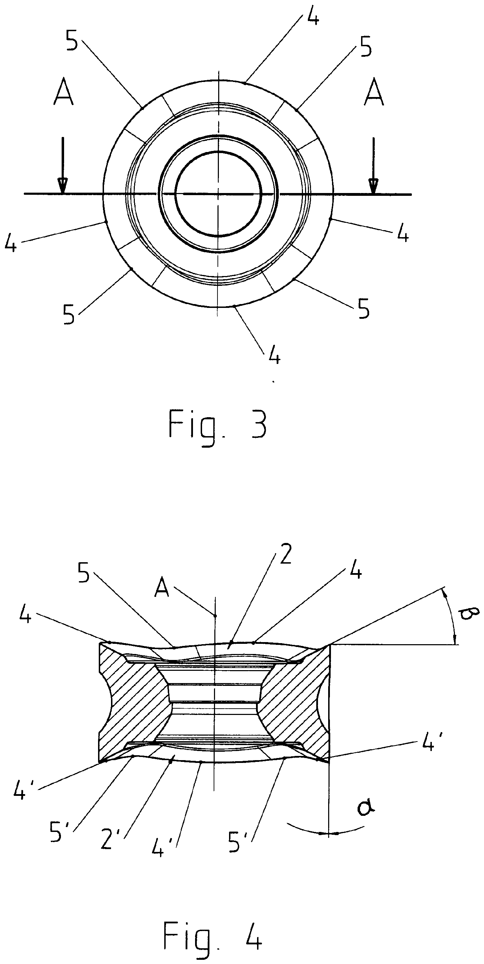

- Fig. 3: den Schneideinsatz nach Fig. 1 in Draufsicht
- Fig. 4: den Schneideinsatz in Seitenansicht im Schnitt A-A
- Fig. 5: ein Fräswerkzeug in Schrägansicht mit vier Schneideinsätzen nach Fig. 1
- Fig. 6: das Fräswerkzeug nach Fig. 5 in Vorderansicht
- Fig. 7: das Fräswerkzeug nach Fig. 5 in Seitenansicht

Der Schneideinsatz weist einen im Wesentlichen zylinderförmigen Grundkörper mit einer Achse A auf. Die Mantelfläche des Zylinders bildet die Freifläche -1-des Schneideinsatzes. Die Deckflächen des Zylinders bilden die Spanflächen - 2-, -2'-. An der Verschneidung von Freifläche -1- und Spanflächen -2-, 2'- sind die Schneidkanten -3-, -3'- ausgebildet. Die Schneidkanten -3-, -3'- verlaufen in Richtung auf die Spanflächen -2-, -2'- gesehen, exakt kreisförmig, während sie in Richtung der Achse A, auf die Freifläche -1- gesehen, gleichmäßig um den Umfang verteilt, vier konvex kurvenförmige Abschnitte -4-, -4'- aufweisen, die jeweils durch konkave Abschnitte -5-, -5'- miteinander verbunden sind.
Die Freifläche -1- weist einen exakten Freiwinkel von 0° auf.
Die Spanflächen -2-, -2'- weisen unmittelbar angrenzend an die Schneidkanten -3-, -3'- einen ringförmigen Bereich -7-, -7'- mit einem Spanwinkel β von 25° auf. Dieser ringförmige Bereich -7-, -7'- geht über eine Stufe -9-, -9'- in eine ebene Einsenkung -10-, -10'- im Zentrumsbereich des Schneideinsatzes über.
Im Mittelbereich der Freifläche -1- sind vier kalottenförmige Ausnehmungen -6-eingebracht, welche zur Indexierung des Schneideinsatzes im Werkzeuggrundkörper -12- dienen. Die konvexen vier Abschnitte der gegenüberliegenden Schneidkanten -3-, -3'- sind dabei derart angeordnet, dass auch bei einem Wenden des Schneideinsatzes im Werkzeug jeweils die gleiche Positionierung der Schneidkanten -3- bzw. -3'- gewährleistet ist. Dies wird dadurch erreicht, dass der Schneidkantenverlauf der beiden gegenüberliegenden Spanflächen -2-, -2'- um eine Querachse zur Achse A um 180° zueinander verdreht ist.

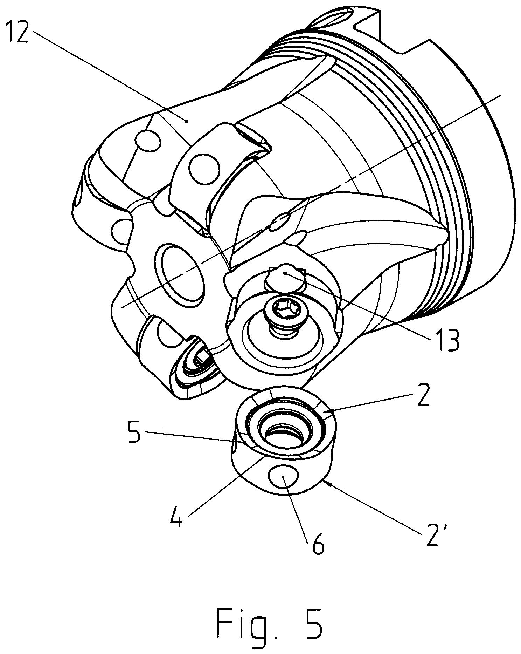

In den Figuren 5, 6 und 7 ist ein Fräswerkzeug mit vier Schneideinsätzen dargestellt.
In Figur 5 ist ein Schneideinsatz vom Plattensitz entfernt dargestellt, so dass das Indexierelement -13- des Grundkörpers -12- mit zumindest abschnittsweise kugelförmiger Oberfläche zu erkennen ist. Das Indexierelement -13- greift, bei durch die Klemmschraube fixiertem Schneideinsatz, in die entsprechende kalottenförmige Ausnehmung des Schneideinsatzes ein und positioniert diesen auf dem Plattensitz des Werkzeuggrundkörpers. Bei einem Verschleiß der sich gerade in Schneidposition befindlichen Schneidkantenabschnitte -4- und -5-wird der Schneideinsatz nach einem Lösen der Klemmschraube um ¼ Umdrehung verdreht, bis sich die nächsten unverschlissenen Schneidkantenabschnitte -4- und -5- in Schneidposition befinden. Beim Verschleiß aller vier Schneidkantenabschnitte -4- und -5- auf der Seite der Spanfläche -2- kann der Schneideinsatz gewendet werden und es können nacheinander die vier Schneidkatenabschnitte -4'- und -5'- auf der gegenüberliegenden Spanfläche -2'- zum Einsatz gebracht werden.

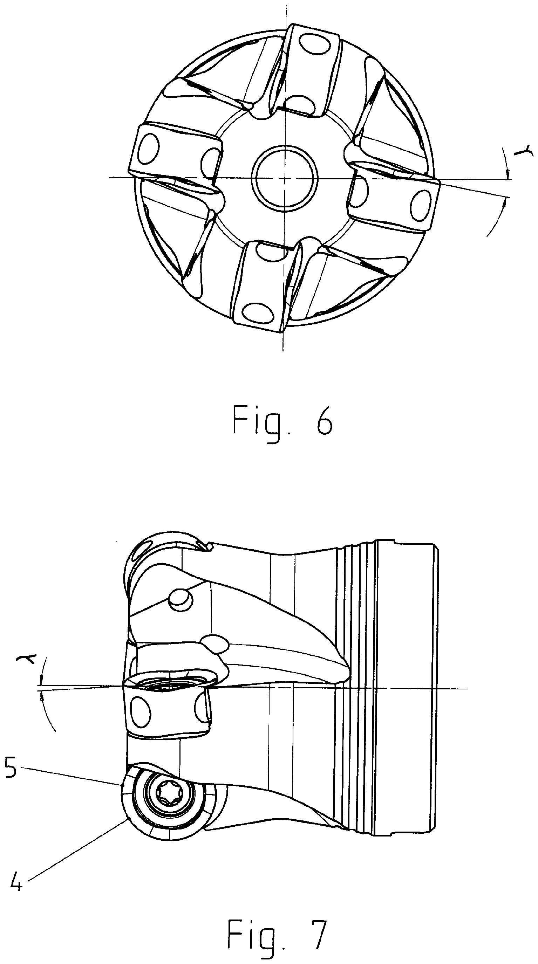

In Figur 6 ist der radiale Anstellwinkel γ von -11° und in Figur 7 der achsiale Anstellwinkel λ von -4° zu erkennen, unter dem jeder Schneideinsatz geneigt, im Werkzeuggrundkörper angeordnet ist, um die für eine optimale Zerspanung notwendige Freistellung der Schneideinsätze zu gewährleisten.
In Figur 7 ist zu erkennen, dass die Schneideinsätze so im Werkzeuggrundkörper -12- angeordnet sind, dass der konvex kurvenförmige Abschnitt -4- der Schneidkante -3- im radial außen liegenden Bereich des Fräswerkzeuges angeordnet ist, während der konkav kurvenförmige Abschnitt -5- der Schneidkante -3- im radial innen liegenden Bereich des Fräswerkzeuges angeordnet ist.

## Patentansprüche

1. Fräswerkzeug mit
einem Werkzeuggrundkörper (12) zur Aufnahme eines oder mehrerer Schneideinsätze und
zumindest einem Schneideinsatz zur spanabhebenden Bearbeitung mit einem im Wesentlichen zylinderförmigen Grundkörper, mit einer Achse A, mit einer seitlichen Freifläche (1) und gegenüberliegenden Spanflächen (2,2'), wobei an der Verschneidung dieser Flächen Schneidkanten (3,3') gebildet sind, die in Richtung auf die Spanflächen (2,2') gesehen kreisförmig verlaufen und wobei die Spanflächen (2,2') unmittelbar angrenzend an die Schneidkanten (3,3') einen ringförmigen Bereich (7,7') aufweisen, der in eine Einsenkung (10,10') im Zentrumsbereich übergeht, wobei die Schneidkanten (3,3') in Richtung der Achse A, jeweils mindestens zwei konvex kurvenförmige Abschnitte (4,4') aufweisen, die durch konkav kurvenförmige oder im Wesentlichen gerade Abschnitte (5,5') miteinander verbunden sind
**dadurch gekennzeichnet, dass** der Werkzeuggrundkörper (12) zumindest ein abschnittsweise kugelförmig ausgeführtes Indexierelement (13) aufweist und der zumindest eine Schneideinsatz derart an dem Werkzeuggrundkörper angeordnet ist, dass ein konvex kurvenförmiger Abschnitt (4, 4') der in Schneidposition befindlichen Schneidkante (3, 3') im radial außen liegenden Bereich des Fräswerkzeugs angeordnet ist, während ein konkav kurvenförmiger Abschnitt (5, 5') der in Schneidposition befindlichen Schneidkante (3, 3') im radial innen liegenden Bereich des Fräswerkzeugs angeordnet ist.

2. Fräswerkzeug nach Anspruch 1 **dadurch gekennzeichnet, dass** die Freifläche (1) des Schneideinsatzes einen Freiwinkel α von 0° aufweist.

3. Fräswerkzeug nach Anspruch 1 oder 2 **dadurch gekennzeichnet, dass** der ringförmige Bereich (7,7') des Schneideinsatzes einen Spanwinkel β im Bereich von 20° - 30° aufweist.

4. Fräswerkzeug nach einem der Ansprüche 1 bis 3, **dadurch gekennzeichnet, dass** der ringförmige Bereich (7,7') über eine Stufe (9,9') in eine ebene Einsenkung (10,10'), senkrecht zur Achse A, übergeht.

5. Fräswerkzeug nach einem der Ansprüche 1 bis 4, **dadurch gekennzeichnet, dass** die Freifläche (1) des Schneideinsatzes mittig mindestens zwei kalottenförmigen Ausnehmungen (6) zur Indexierung des Schneideinsatzes im Werkzeuggrundkörper (12) aufweist.

6. Fräswerkzeug nach Anspruch 5, **dadurch gekennzeichnet, dass** die Anzahl der kalottenförmigen Ausnehmungen (6) der Anzahl der konvex kurvenförmigen Abschnitte (4) bzw. (4') auf einer Seite des Schneideinsatzes entspricht und dass die konvex kurvenförmigen Abschnitte (4,4') und die kalottenförmigen Ausnehmungen (6) so zueinander angeordnet sind, dass beim Wenden des Schneideinsatzes im Werkzeuggrundkörper (12) eine gleichartige Positionierung der in Schneidposition stehenden Schneidkanten (3) bzw. (3') vorliegt.

7. Fräswerkzeug nach einem der Ansprüche 1 bis 6, **dadurch gekennzeichnet, dass** an jeder Spanfläche (2,2') des Schneideinsatzes jeweils vier konvex kurvenförmige Schneidkantenabschnitte (4,4') und vier kalottenförmige Ausnehmungen (6) ausgebildet sind.

8. Fräswerkzeug nach einem der Ansprüche 1 bis 7, **dadurch gekennzeichnet, dass** der Schneideinsatz eine die Einsenkung (10,10') im Zentrumsbereich durchsetzende Mittellochbohrung (11) aufweist.

## Claims

1. A milling tool having
a main tool body (12) for receiving one or more cutting inserts and
at least one cutting insert for machining, having a substantially cylindrical main body, having an axis A, having a lateral flank (1) and opposing rake faces (2, 2'), wherein cutting edges (3, 3') are formed at the intersection of said flank (1) and rake faces (2, 2'), said cutting edges extending in a circular manner as seen in the direction toward the rake faces (2, 2'), and wherein the rake faces (2, 2') have an annular region (7, 7') immediately adjacent to the cutting edges (3, 3'), said annular region merging into a depression (10, 10') in the central region, wherein the cutting edges (3, 3') have, in the direction of the axis A, in each case at least two convexly curved sections (4, 4') which are connected together by concavely curved or substantially straight sections (5, 5'),
**characterized in that** the main tool body (12) has at least one indexing element (13) configured in a regionally spherical manner and the at least one cutting insert is arranged at the main tool body such that a convexly curved section (4, 4') of the cutting edge (3, 3') being in a cutting position is arranged in the radially external region of the milling tool, while a concavely curved section (5, 5') of the cutting edge (3, 3') being in a cutting position is arranged in the radially internal region of the milling tool.

2. The milling tool as claimed in claim 1, **characterized in that** the flank (1) of the cutting insert has a clearance angle α of 0°.

3. The milling tool as claimed in claim 1 or 2, **characterized in that** the annular region (7, 7') of the cutting insert has a rake angle β in the range of 20° - 30°.

4. The milling tool as claimed in one of claims 1 to 3, **characterized in that** the annular region (7, 7') merges via a step (9, 9') into a planar depression (10, 10'), perpendicular to the axis A.

5. The milling tool as claimed in one of claims 1 to 4, **characterized in that** the flank (1) of the cutting insert has in its center at least two spherical-cap-shaped recesses (6) for indexing the cutting insert in the main tool body (12).

6. The milling tool as claimed in claim 5, **characterized in that** the number of spherical-cap-shaped recesses (6) corresponds to the number of convexly curved sections (4) or (4') on one side of the cutting insert, and **in that** the convexly curved sections (4, 4') and the spherical-cap-shaped recesses (6) are arranged in such a manner with respect to one another that when the cutting insert is turned in the main tool body (12) the cutting edges (3) or (3') located in the cutting position are positioned in the same way.

7. The milling tool as claimed in one of claims 1 to 6, **characterized in that** in each case four convexly curved cutting edge sections (4, 4') and four spherical-cap-shaped recesses (6) are formed on each rake face (2, 2') of the cutting insert.

8. The milling tool as claimed in one of claims 1 to 7, **characterized in that** the cutting insert has a central bore (11) passing through the central region of the depression (10, 10').

## Revendications

1. Outil de fraisage comprenant un corps de base d'outil (12) pour recevoir un ou plusieurs inserts de coupe et
au moins un insert de coupe pour l'usinage par enlèvement de copeaux avec un corps de base de forme essentiellement cylindrique, avec un axe A, avec une face de dépouille latérale (1) et des faces de coupe opposées (2, 2'), des arêtes de coupe (3, 3') étant formées au niveau de l'intersection de ces faces, lesquelles s'étendent sous forme circulaire, vu dans la direction des faces de coupe (2, 2') et les faces de coupe (2, 2') présentant une région annulaire (7, 7') directement adjacente aux arêtes de coupe (3, 3'), laquelle se prolonge par un renfoncement (10, 10') dans la région centrale, les arêtes de coupe (3, 3') présentant dans la direction de l'axe A à chaque fois au moins deux portions de courbure convexe (4, 4') qui sont connectées l'une à l'autre par des portions (5, 5') essentiellement droites ou de courbure concave,
**caractérisé en ce que** le corps de base d'outil (12) présente au moins un élément d'indexage (13) réalisé en partie sous forme sphérique et l'au moins un insert de coupe est disposé au niveau du corps de base d'outil de telle sorte qu'une portion de courbure convexe (4, 4') de l'arête de coupe (3, 3') se trouvant dans la position de coupe soit disposée dans la région située radialement à l'extérieur de l'outil de fraisage, tandis qu'une portion de courbure concave (5, 5') de l'arête de coupe (3, 3') se trouvant dans la position de coupe est disposée dans la région située radialement à l'intérieur de l'outil de fraisage.

2. Outil de fraisage selon la revendication 1, **caractérisé en ce que** la face de dépouille (1) de l'insert de coupe présente un angle de dépouille α de 0°.

3. Outil de fraisage selon la revendication 1 ou 2, **caractérisé en ce que** la région annulaire (7, 7') de l'insert de coupe présente un angle de coupe β dans une plage de 20° à 30°.

4. Outil de fraisage selon l'une quelconque des revendications 1 à 3, **caractérisé en ce que** la région annulaire (7, 7') se prolonge par le biais d'un étage (9, 9') par un renfoncement plan (10, 10'), perpendiculairement à l'axe A.

5. Outil de fraisage selon l'une quelconque des revendications 1 à 4, **caractérisé en ce que** la face de dépouille (1) de l'insert de coupe présente au centre au moins deux évidements en forme de calotte (6) pour l'indexage de l'insert de coupe dans le corps de base d'outil (12).

6. Outil de fraisage selon la revendication 5, **caractérisé en ce que** le nombre des évidements en forme de calotte (6) correspond au nombre des portions de courbure convexe (4) ou (4') d'un côté de l'insert de coupe et **en ce que** les portions de courbure convexe (4, 4') et les évidements en forme de calotte (6) sont disposés les uns par rapport aux autres de telle sorte que lorsque l'insert de coupe tourne dans le corps de base d'outil (12), il se produise un positionnement identique des arêtes de coupe (3) ou (3') se trouvant dans la position de coupe.

7. Outil de fraisage selon l'une quelconque des revendications 1 à 6, **caractérisé en ce qu'**au niveau de chaque face de dépouille (2, 2') de l'insert de coupe sont à chaque fois réalisées quatre portions d'arête de coupe de courbure convexe (4, 4') et quatre évidements en forme de calotte (6).

8. Outil de fraisage selon l'une quelconque des revendications 1 à 7, **caractérisé en ce que** l'insert de coupe présente un alésage de perçage central (11) traversant le renfoncement (10, 10') dans la région centrale.
